(19) Europäisches Patentamt
European Patent Office
Office européen des brevets

(11) **EP 2 786 795 B1**

(12) **EUROPEAN PATENT SPECIFICATION**

(45) Date of publication and mention
of the grant of the patent:
**08.12.2021 Bulletin 2021/49**

(51) Int Cl.:
***B01D 53/86*** *(2006.01)*　　***F23J 15/02*** *(2006.01)*

(21) Application number: **14163154.9**

(22) Date of filing: **02.04.2014**

(54) **Denitration system**

Denitrierungssystem

Système de dénitration

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2013 JP 2013079885**

(43) Date of publication of application:
**08.10.2014 Bulletin 2014/41**

(73) Proprietor: **Mitsubishi Power, Ltd.
Yokohama (JP)**

(72) Inventors:
• **Terazawa, Yoshiharu
Kure-shi, Hiroshima 737 8508 (JP)**
• **Shishido, Satoru
Kure-shi, Hiroshima 737 8508 (JP)**
• **Hiramoto, Mitsunori
Kure-shi, Hiroshima 737 8508 (JP)**
• **Wada, Toshimichi
Kure-shi, Hiroshima 737 8508 (JP)**

(74) Representative: **Lock, Graham James
Fry Heath & Spence LLP
Unit A, Faraday Court
Faraday Road
Crawley, West Sussex RH10 9PU (GB)**

(56) References cited:
**EP-A1- 0 753 701　　EP-A2- 2 108 438
WO-A1-2005/061103　JP-A- 2004 237 244
US-A- 4 160 009　　US-A- 5 423 272**

• **None**

**Description**

BACKGROUND OF THE INVENTION

Field of the Invention

The present invention relates to a denitration system. Furthermore disclosed is a method for additionally installing a denitrator using a selective catalytic reduction method in a thermal power generation plant.

Description of the Related Art

Nitrogen oxides (NOx) in flue gases discharged from thermal power stations, factories and the like are substances causing photochemical smog and acid rain, and thus should be removed (denitrated). As a conventional NOx removing technology, the flue-gas denitration method has been employed in which the selective catalytic reduction reactor (denitrator) is used with ammonia ($NH_3$) as a reducing agent. In the selective catalytic reduction reaction according to this flue-gas denitration method, $NH_3$ is injected into the NOx contained in the flue gas and the NOx is reduced by the denitration catalyst as shown in formula (1).

$$4NO + 4NH_3 + O_2 \rightarrow 4N_2 + 6H_2O \ .....  \qquad (1)$$

The denitrator is typically operated in a temperature range in which the reduction reaction of the formula (1) is promoted (300-400°C) in order to maintain denitration performance thereof. When sulfur oxides such as $SO_2$ are contained in the flue gas, the denitration catalyst promotes the reaction represented by formula (2). Then, sulfur trioxide ($SO_3$) formed through the reaction of the formula (2) reacts with ammonia used as the reducing agent according to formula (3) in a lower temperature range to precipitate acidic ammonium sulfate (($NH_4$)$HSO_4$).

$$2SO_2 + O_2 \rightarrow 2SO_3 \ .....  \qquad (2)$$

$$SO_3 + NH_3 + H_2O \leftrightarrow (NH_4)HSO_4 \ .....  \qquad (3)$$

When the acidic ammonium sulfate is precipitated in the apparatuses (particularly the denitration catalyst layer in the denitrator) installed downstream of the reducing agent injector which supplies the reducing agent ($NH_3$), the denitration catalyst is malfunctioned so that denitration performance of the denitrator is decreased.
Thus, need for additional installation of denitrators has been arisen in order to dissolve the influence of NOx described above in thermal power generation plants which have not been equipped with denitrators.
In addition, mercury is also contained in the flue gases discharged from thermal power stations and there exists mercury in oxidized state and that in metallic state as the mercury compounds discharged. Among those mercury compounds, the mercury in oxidized state (mercury halides, particularly mercury chloride which is formed through a reaction with hydrogen chloride or chlorine in the flue gases) has a low vapor pressure and is soluble, and thus is easily immobilized in ashes or an absorbent liquid in a desulfurizer so that it can be collected and removed relatively easily. On the other hand, the mercury in metallic state does not stick to soot or other particles and remains in the gas phase even at a temperature near the atmospheric temperature. Therefore, it is difficult to remove the mercury in metallic state through conventional dust removing apparatuses such as an electrostatic precipitator or bag filter.
Thus, a method has been practiced in which the mercury in metallic state is oxidized to that in oxidized state which has a low vapor pressure in a reactor comprising a catalyst having an oxidizing function for mercury in the reactor followed by removing the mercury in oxidized state through a dust removing apparatus, desulfurizer, or the like installed downstream of the reactor (Japanese Patent Laid-Open No. 2004-237244).
The mercury oxidation reaction in the reactor is represented by formula (4). Additionally, the mercury oxidation reaction may also occur with the denitration catalyst within the denitrator and a denitration catalyst having both a denitration activity and mercury oxidation activity has also been proposed. Placing such a mercury oxidation catalyst in the lower temperature part of the denitration system can lead to promotion of the mercury oxidation reaction. That is, it is considered to be desirable to arrange the mercury oxidation catalyst in the lower temperature region, because the lower the temperature is, the more the mercury oxidation reaction represented by the formula (4) tends to proceed to the right direction in the formula (4).

$$2Hg0 + Ha_2 \leftrightarrow 2HgHa \ .....  \qquad (4)$$

Ha:     halogen (F, Cl, Br, I)

Hg0:    mercury in metallic state

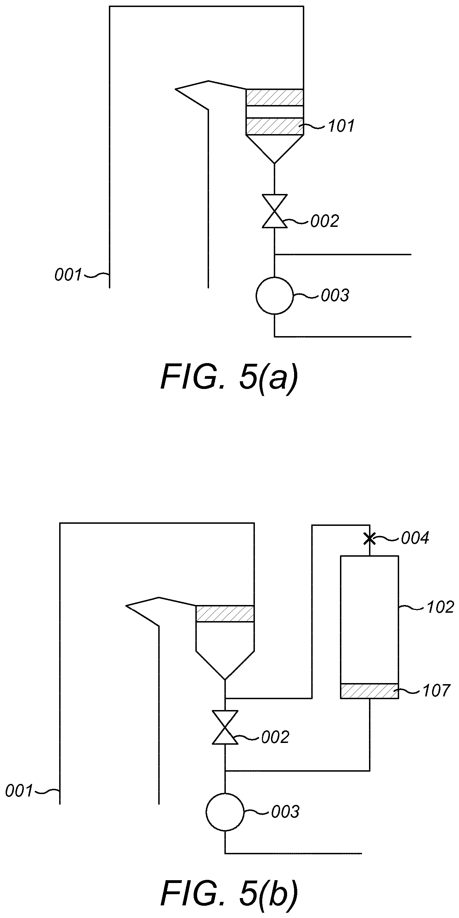

Figure 5 is a layout drawing of a boiler illustrating relocation of an economizer to a denitrator exit. Upon additional installation of a denitrator to a conventional thermal power generation plant shown in Figure 5(a), there exists a problem that the exit temperature in the economizer is lower than the optimum temperature for denitration.

Thus, upon additional installation of the denitrator to the plant, an alteration is carried out in which the boiler economizer, which utilizes boiler waste heat for preheating boiler feedwater, is relocated to the denitrator exit in order to raise the temperature of the flue gas to a temperature above the condensation temperature of the acidic ammonium sulfate so as to prevent the acidic ammonium sulfate condensation. Furthermore, a water-washing equipment (washing equipment) for water-washing (washing) the economizer (heat exchanger) relocated to the denitrator exit is attached in order to remove the acidic ammonium sulfate precipitated in the denitration catalyst layer.

The economizer 101 which has been arranged in the vicinity of the exit of the boiler 001 as shown in Figure 5(a) is relocated to the exit of the denitrator 102 as shown in Figure 5(b).

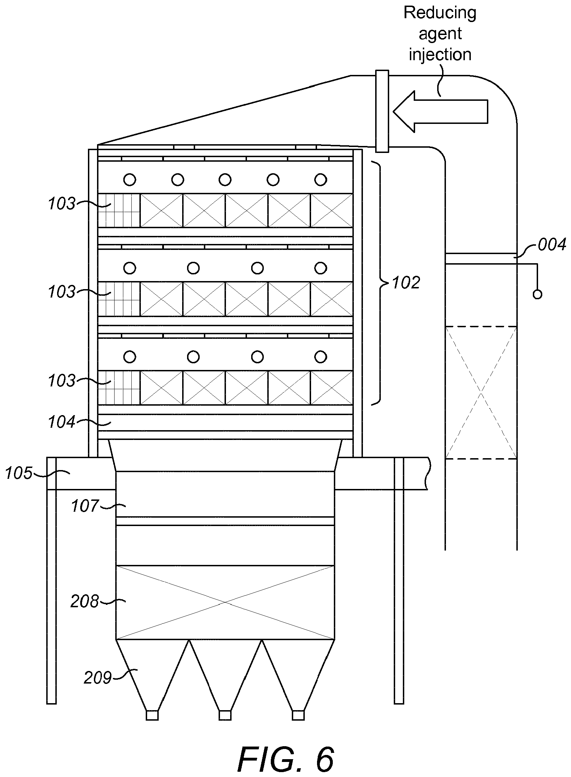

As shown in Figure 5(b), when the economizer 101 is relocated to the exit of the denitrator 102, the weight of the economizer 107 should be supported by a denitration catalyst supporting beam 104 supporting the denitration catalyst 103 and denitrator supporting beam 105 supporting denitrator 102 as the economizer 107 is attached directly to the denitration catalyst 103 in the denitrator 102 as shown in Figure 6. In this case, a need for increasing in size of the denitration catalyst supporting beam 104 and denitrator supporting beam 105 is arisen in order to stand the weight load of the economizer 107 relocated to the exit of the denitrator 102. In addition, there also exists a risk for ash deposition on the denitration catalyst supporting beam 104 due to increasing in size thereof. Furthermore, turbulence of the flue gas flow may occur due to the denitration catalyst supporting beam 104 increased in size, thereby adversely affecting the catalytic performance of the denitration catalyst arranged upstream of the denitration catalyst supporting beam 104.

When the economizer 101 is relocated to the exit of the denitrator 102, there occur problems such as ash deposition and external surface corrosion of the economizer tubes due to the acidic ammonium sulfate condensation, as the economizer 107 is arranged downstream of the reducing agent injector 004 as shown in Figure 6. Particularly, when the distance between the denitration catalyst in the denitrator 102 and economizer 107 is short, maldistribution between the $NH_3$ and $SO_3$ shown in the formulae (1) and (2) leads to also maldistribution of the acidic ammonium sulfate condensation so as to result in local deposition of the ashes, thereby causing plugging and corrosion. Additionally, the acidic ammonium sulfate has high adhesiveness, thereby often leading to adhesion of the ashes to cause plugging and corrosion.

As described above, a method may be employed in which a mercury oxidation catalyst is arranged in the lower temperature region downstream of the economizer 107 in order to enhance the mercury oxidizing performance, however, there exists a problem that water wetting due to water from the water-washing equipment may cause deterioration of the mercury oxidation catalyst in the case of attaching the water-washing equipment to the economizer 107.

US 5423272 relates to a method for optimizing the operating efficiency of a fossil fuel-fired power generation system. The document discloses a system, which may or may not include selective catalytic reducer (SCR) includes at least a fossil fuel-fired steam generator having a burner region. At first heat transfer surface is located downstream from the burner region. A bypass is provided around a first heat transfer surface. An air preheater is located downstream of the first heat transfer surface. First and second flow paths from the burner region to the air preheater for the gases of combustion are provided. A sensor for sensing the temperature of the gases existing from the air preheater is provided and, when an SCR is included, a sensor for sensing the temperature of gases entering the SCR is included.

WO 2005/061103 relates to a multi-stage heat absorbing reactor and process for SCR of nitric oxides (NOX) and for oxidation of elemental mercury. The document discloses a selective catalytic reduction apparatus having at least first and last catalyst layers in series for reducing nitrogen oxides in a flue gas. At least one inner stage heat exchanger is located after the first layer and before the last layer. This heat exchanger lowers flue gas temperature and acts as a mixing body to lower the standard deviation of the $NH_3$/NO ratio entering catalyst layers after the first catalyst layer, thus providing better consumption of both ammonia and NOX in the reactor than would be achieved in the absence of the interstage heat exchanger.

EP0753701 relates to a boiler with denitrification apparatus. The document discloses an economizer divided into a high termperature economizer and a low temperature economizer disposed on the upstream and downstream sides respectively of a denitrification apparatus. A bypass duct is provided to either or both of the economizers so that the gas temperature of the denitrification apparatus, an air preheater and an electrostatic precipitator is controlled.

The present invention provides a denitration system capable of avoiding increasing in size of the denitration catalyst supporting beam 104 and denitrator supporting beam 105, preventing ash deposition and deviation of the flue gas flow rate distribution, preventing plugging and corrosion due to the condensation of the acidic ammonium sulfate, and preventing the deterioration of the mercury oxidation catalyst due to water wetting.

## SUMMARY OF THE INVENTION

A denitration system of the present invention comprises a denitrator comprising a denitration catalyst (103) which, with a reducing agent injected into a nitrogen oxide in a flue gas, denitrates the nitrogen oxide and a casing; an economizer for preheating a boiler feed water by the flue gas heat exchange, arranged downstream of the denitrator; an expansion joint duct for connecting of an exit of the denitrator and an inlet of the economizer; and a supporting structure for holding loads of the denitrator, the expansion joint duct and the economizer, wherein the expansion joint duct has a downstream length to ensure mixing of the reducing agent and sulfur trioxide in the flue gas exhausted from the denitrator; the supporting structure provides a denitrator supporting beam for supporting loads of the casing, the denitration catalyst and a denitration catalyst supporting beam which holds the denitration catalyst in the denitrator, and an economizer supporting beam which supports loads of the expansion joint duct and the economizer; the economizer is supported by the economizer supporting beam, the expansion joint duct is supported by the economizer supporting beam through the economizer, whereby the economizer is suspended from the expansion joint duct, and whereby the economizer supporting beam is connected to the supporting structure.

According to this configuration, installing the expansion joint makes it possible to mix gas downstream of the denitrator sufficiently enough so as to prevent the imbalance of the condensation of the acidic ammonium sulfate and the like due to the imbalance between the sulfur oxide and the reducing agent, as well as the ash plugging and corrosion.

In addition, it is possible to avoid increasing in size of the denitration catalyst supporting beam supporting the denitration catalyst and denitrator supporting beam supporting the denitrator, to avoid ash deposition and deviation of the flue gas flow rate distribution, and to prevent plugging and corrosion due to the condensation of the acidic ammonium sulfate and the like.

In addition, it is possible to realize miniaturization of the denitration catalyst supporting beam supporting the denitration catalyst and denitrator supporting beam supporting the denitrator, to prevent ash deposition and deviation of the flue gas flow rate distribution, and to prevent plugging and corrosion due to the condensation of the acidic ammonium sulfate and the like.

The denitration system of the present invention may comprise a washing equipment for washing the heat exchanger.

According to this configuration, it is possible to wash the acidic ammonium sulfate and the like attached in the heat exchanger.

The denitration system of the present invention may comprise a mercury oxidation catalyst oxidizing mercury in the flue gas with a halogen gas, the catalyst being arranged downstream of the heat exchanger, wherein the expansion joint ensures a mixing length to prevent deviation of the flue gas flow rate distribution.

According to this configuration, installing the expansion joint makes it possible to avoid deviation of the flue gas flow rate distribution and then to form a homogeneous gas distribution upstream of the mercury oxidation catalyst so as to allow the mercury oxidation catalyst to exert high activity thereof.

In the denitration system of the present invention, gas temperatures in the denitrator and the heat exchanger may be higher than the condensation temperature of acidic ammonium sulfate.

According to this configuration, it is possible to prevent the acidic ammonium sulfate condensation and thus to prevent the ash plugging in the heat exchanger so that pressure loss increase can be inhibited and the water-washing equipment becomes unnecessary.

In the denitration system of the present invention, the gas temperature at the exit in the heat exchanger may be lower than the gas temperature at the entry in the denitrator.

According to this configuration, arranging the mercury oxidation catalyst in the lower temperature region allows the mercury oxidation catalyst to exert high activity thereof as the mercury oxidation catalyst tends to be activated more at a lower temperature.

In the denitration system of the present invention, the heat exchanger may be relocated from upstream of the denitrator to downstream thereof.

According to this configuration, relocation of the heat exchanger to downstream of the denitrator makes it possible to keep the gas temperature in the denitrator at a high temperature so that the temperature of the flue gas can be higher than the condensation temperature of the acidic ammonium sulfate and the like.

According to the present invention, it is possible to avoid increasing in size of the denitration catalyst supporting beam and denitrator supporting beam, to prevent ash deposition and deviation of the flue gas flow rate distribution, to prevent plugging and corrosion due to the acidic ammonium sulfate condensation, and to prevent deterioration of the mercury oxidation catalyst due to water wetting.

## BRIEF DESCRIPTION OF THE DRAWINGS

Figure 1 is a layout drawing of a vicinity of a denitrator in a denitration system according to the present embodiment;
Figure 2 is a layout drawing of a vicinity of a denitrator in a denitration system where a water-washing equipment has been unnecessary;
Figure 3 is a layout drawing of a vicinity of a denitrator in a denitration system where a water-washing equipment has been unnecessary and a mercury oxidation catalyst is arranged at an exit of an economizer;
Figure 4 is a table showing comparative results of Embodiments and Comparative Example;
Figure 5 is a layout drawing of a boiler illustrating relocation of an economizer to a denitrator exit; and
Figure 6 is a layout drawing of a vicinity of a denitrator in a conventional denitration system.

DETAILED DESCRIPTION OF THE PREFERRED EMBODIMENTS

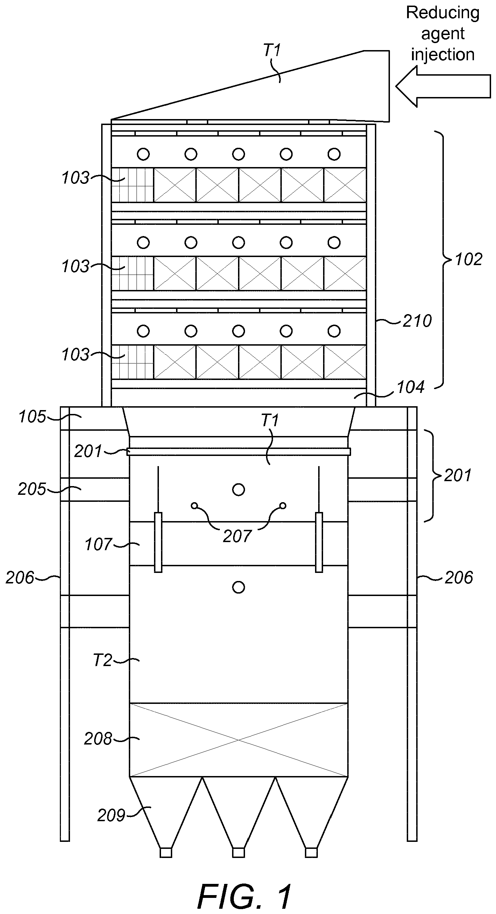

Denitration systems according to the present embodiments will be illustrated referring to the drawings below. Figure 1 is a layout drawing of a vicinity of a denitrator 102 in a denitration system according to the present embodiment. The economizer (heat exchanger) 107 in Figure 1 is relocated from upstream of the denitrator 102 to downstream thereof as well as Figure 5(b). As shown in Figure 1, the denitration system comprises a denitration catalyst 103 included in the denitrator 102; a denitration catalyst supporting beam 104 supporting the denitration catalyst 103 in the denitrator 102; a denitrator supporting beam 105 supporting the denitrator 102; an economizer 107; an expansion joint 201 connecting the denitrator 102 (denitration catalyst 103) and economizer 107; an economizer supporting beam 205 supporting the economizer 107 and the expansion joint 201; a supporting frame 206 connecting the denitrator supporting beam 105 and economizer supporting beam 205 to stand weight loads of the denitrator 102 (denitration catalyst 103), economizer 107 and expansion joint 201; a water-washing equipment 207 for water-washing the economizer 107; an exit duct 208; and an ash hopper 209. In other words, the denitration system according to the present embodiment comprises a denitrator 102 comprising a denitration catalyst 103 which, with a reducing agent (e.g., ammonia) injected into a nitrogen oxide (NOx) in a flue gas, denitrates the nitrogen oxide (NOx); an economizer (heat exchanger) 107 performing waste heat treatment arranged downstream of the denitrator 102; and an expansion joint 201 connecting the denitrator 102 and economizer (heat exchanger) 107 to promote mixing of a sulfur oxide (SOx) and the reducing agent in the flue gas.
The expansion joint 201 is installed at the exit of the denitrator 102 (denitration catalyst 103). The expansion joint 201 ensures a distance between the denitrator 102 (denitration catalyst 103) and economizer 107 (e.g., 4-7 m) and has a function as a duct connecting the denitrator 102 (denitration catalyst 103) and economizer 107. The expansion joint 201 is supported by the economizer supporting beam 205 arranged at a position downstream of and sufficiently distant from the denitration catalyst supporting beam 104. Installing the expansion joint 201 ensures a distance between the reducing agent injector 004 or catalyst layer of the denitration catalyst 103 and the instruments downstream thereof in any length (specifically, 1 m or more, preferably 3 m-7 m), whereby the gas downstream of the denitrator 102 can be sufficiently mixed. Then, this can lead to preventing imbalance of the acidic ammonium sulfate condensation due to imbalance between $NH_3$ and $SO_3$, as well as local ash deposition and preventing corrosion of the economizer tubes. In addition, ensuring the distance between the denitrator 102 and economizer 107 makes it possible to inhibit water wetting of the denitration catalyst layer upon water-washing of the acidic ammonium sulfate attached in the economizer 107 with water-washing equipment 207. Furthermore, ensuring the distance between the denitrator 102 and economizer 107 makes it possible to prevent inflow of spraying steam into the denitration catalyst 103 upon steam leak from the economizer tubes, whereby deterioration of the denitration catalyst 103 can be prevented.
The economizer (heat exchanger) 107 utilizes boiler waste heat to preheat boiler feedwater. The weight of the economizer 107 is supported by the economizer supporting beam 205. The economizer supporting beam 205 supports the economizer 107 by suspending the economizer 107 from the expansion joint 201 through the beam structure. That is, the denitration system of the present embodiment comprises an economizer supporting frame (supporting frame) 206 supporting the denitrator 102 and an economizer supporting beam (supporting beam) 205 supporting the weight of the economizer (heat exchanger) 107 suspended from the expansion joint 201, wherein the economizer supporting beam (supporting beam) 205 is connected to the economizer supporting frame (supporting frame) 206. As a result, the economizer supporting beam 205 has a structure in which the weight load of the economizer 107 suspended by the expansion joint 201 is directly transmitted to the supporting frame 206 and is not transmitted to the denitration catalyst supporting beam 104 nor a casing 210 of the denitrator 102. Therefore, there is no need to increase in size of the denitration catalyst supporting beam 104 nor denitrator supporting beam 105 so that ash deposition on the denitration catalyst supporting beam 104 can be avoided.
The entry and exit temperatures in the denitrator 102 (denitration catalyst 103) T1 is kept at a temperature higher than the temperature at which the acidic ammonium sulfate is precipitated in order to prevent the acidic ammonium sulfate condensation on the denitration catalyst 103 during operation of the denitration system. That is, the gas temperature in the denitrator 102 is higher than the condensation temperature of the acidic ammonium sulfate.
The condensation temperature of the acidic ammonium sulfate is determined by Kelvin formula of formula (5) representing condensation in pores. The acidic ammonium sulfate concentration is determined by the concentrations

of ammonia and $SO_3$. The higher the ammonia concentration is, the higher the acidic ammonium sulfate concentration and condensation temperature thereof are. Thus, the ammonia concentrations are different at the entry and exit in the denitrator 102 (denitration catalyst 103) in which ammonia is consumed through the denitration reaction and the condensation temperatures of the acidic ammonium sulfate are different. The approximate condensation temperatures of the acidic ammonium sulfate range 270°C-300°C at the entry of the denitrator 102 (denitration catalyst 103) and typically 200°C-270°C at the exit, respectively. As the condensation temperatures at the entry and exit in the denitration catalyst 103 are different like this, the entry temperature T1 and exit temperature T1 in the denitrator 102 (denitration catalyst 103) are kept at 380°C exceeding the condensation temperature of the acidic ammonium sulfate (317°C at the entry in the denitration catalyst 103) in order to prevent the acidic ammonium sulfate condensation in the apparatuses downstream of the reducing agent injector, where ammonia exists, (particularly the denitration catalyst 103) during operation of the denitration system. On the other hand, the exit temperature in the economizer 107 T2 may be lowered to a temperature below the condensation temperature of the acidic ammonium sulfate (273°C at the exit of the denitration catalyst 103) in some cases, and thus the water-washing equipment 207 is arranged to pour water for water-washing of the acidic ammonium sulfate precipitated in the economizer 107.

[Expression 1]

$$\ln \frac{P}{P_0} = -\frac{2\gamma V_m}{rRT} \qquad \cdots \cdots (5$$

P: vapor pressure, $P_0$: saturated vapor pressure, $\gamma$: surface tension [N/m], Vm: molar volume [m³/mol], r: droplet radius [m], R: gas constant [J/mol*K], T: absolute temperature [K]

According to the present embodiment, it is possible to avoid increasing in size of the denitration catalyst supporting beam 104 and denitrator supporting beam 105, to prevent ash deposition and deviation of the flue gas flow rate distribution, and to prevent plugging and corrosion due to the acidic ammonium sulfate condensation.

When the exit temperature in the economizer 107 T2 is set to a temperature higher than the condensation temperature of the acidic ammonium sulfate (e.g., above 273°C), the acidic ammonium sulfate condensation in the economizer 107 can be prevented, whereby the plugging and corrosion due to the acidic ammonium sulfate condensation can be prevented and the water-washing equipment 207 to water-wash the acidic ammonium sulfate becomes unnecessary.

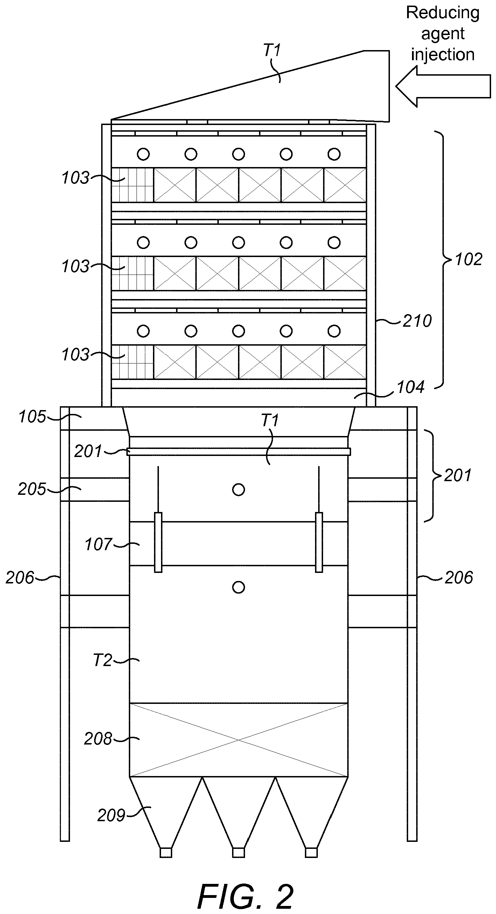

Figure 2 is a layout drawing of a vicinity of a denitrator 102 in a denitration system where a water-washing equipment 207 has been unnecessary. The economizer supporting beam 205 supports the economizer 107 by suspending the economizer 107 from the expansion joint 201 through the beam structure as well as Figure 1. The economizer supporting beam 205 also supports the denitrator 102 (denitration catalyst 103) arranged in the upper position of the expansion joint 201 through the beam structure. As a result, the economizer supporting beam 205 has a structure in which the weight load of the economizer 107 and denitrator 102 (denitration catalyst 103) is directly transmitted to the supporting frame 206 and is not transmitted to the denitration catalyst supporting beam 104 nor a casing 210. Therefore, it is possible to further miniaturize the denitration catalyst supporting beam 104 and denitrator supporting beam 105, whereby ash deposition on the denitration catalyst supporting beam 104 can be avoided. On the other hand, as the exit temperature in the economizer 107 T2 is set to a temperature higher than the condensation temperature of the acidic ammonium sulfate, the water-washing equipment 207 is no longer necessary contrary to Figure 1.

If the water-washing equipment 207 is unnecessary, deterioration of the mercury oxidation catalyst due to water wetting is prevented, and thus a catalyst having an oxidizing function for mercury can be arranged at the exit of the economizer 107 (or downstream thereof).

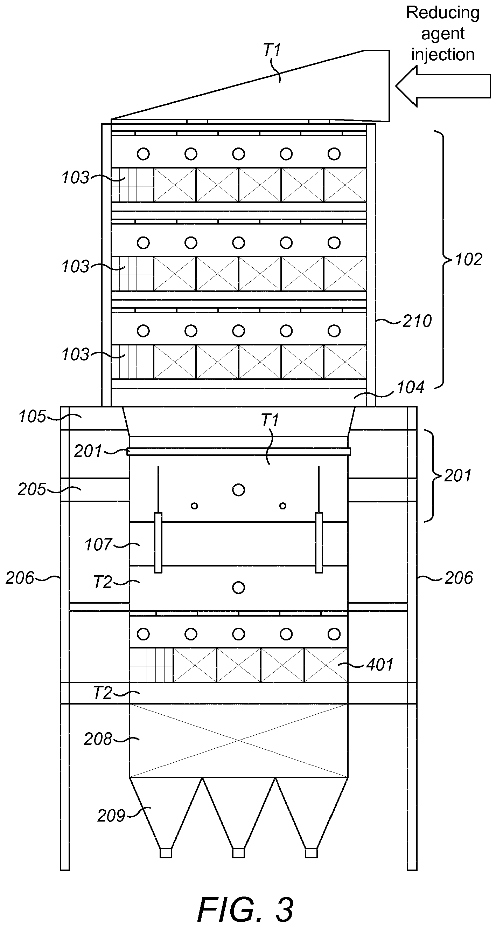

Figure 3 is a layout drawing of a vicinity of a denitrator 102 in a denitration system where a water-washing equipment 207 has been unnecessary and a mercury oxidation catalyst 401 is arranged at an exit of an economizer 107. As shown in Figure 3, the denitration system of the present embodiment comprises a mercury oxidation catalyst 401 oxidizing mercury in the flue gas with a halogen gas, the catalyst being arranged downstream of the heat exchanger, wherein the expansion joint 201 promotes mixing the halogen gas and the mercury. When the mercury oxidation catalyst 401 is arranged at the exit in the economizer 107, condensation of the acidic ammonium sulfate on the mercury oxidation catalyst 401 can be prevented as the exit temperature in the economizer 107 T2 is kept at a temperature above the condensation temperature of the acidic ammonium sulfate, and thus deterioration of the mercury oxidizing function (plugging and corrosion) of the mercury oxidation catalyst 401 due to the condensation of the acidic ammonium sulfate can be prevented. In addition, the water-washing equipment 207 becomes unnecessary, and thus deterioration of the mercury oxidation catalyst 401 due to water wetting can be prevented.

When the mercury oxidation catalyst 401 is arranged at the exit in the economizer 107, the exit temperature in the economizer 107 T2 (or entry and exit temperature in the mercury oxidation catalyst 401) can be lower than the entry and exit temperature in the denitrator 102 (denitration catalyst 103) T1. On the other hand, the mercury oxidation catalyst tends to be activated more at a lower temperature. Therefore, the mercury oxidation catalyst 401 exerts high activity thereof. That is, the mercury oxidation catalyst 401 exerts high activity thereof as the gas temperature in the economizer (heat exchanger) 107 is lower than the gas temperature in the denitrator 102.

Additionally, installing the expansion joint 201 makes it possible to ensure a distance between the reducing agent injector 004 or catalyst layer of the denitration catalyst 103 and mercury oxidation catalyst 401 arranged downstream thereof in any length (specifically, 1 m or more, preferably 3 m-7 m). As a result, the mixing length for the gas downstream of the denitrator 102 can be ensured and the mercury in metallic state can be sufficiently stirred, whereby homogeneous gas distribution can be formed upstream of the mercury oxidation catalyst 401 and the mercury oxidation catalyst 401 exerts high activity thereof.

When the exit temperature in the economizer 107 T2 (or entry and exit temperature in the mercury oxidation catalyst 401) is set to a temperature below the entry and exit temperature in the denitrator 102 (denitration catalyst 103) T1 so that the amount of the heat recovered by the economizer 107 is decreased, reduction of the overall heat efficiency in the plant can be prevented by increasing the heat transfer area of the air heater in the economizer 107.

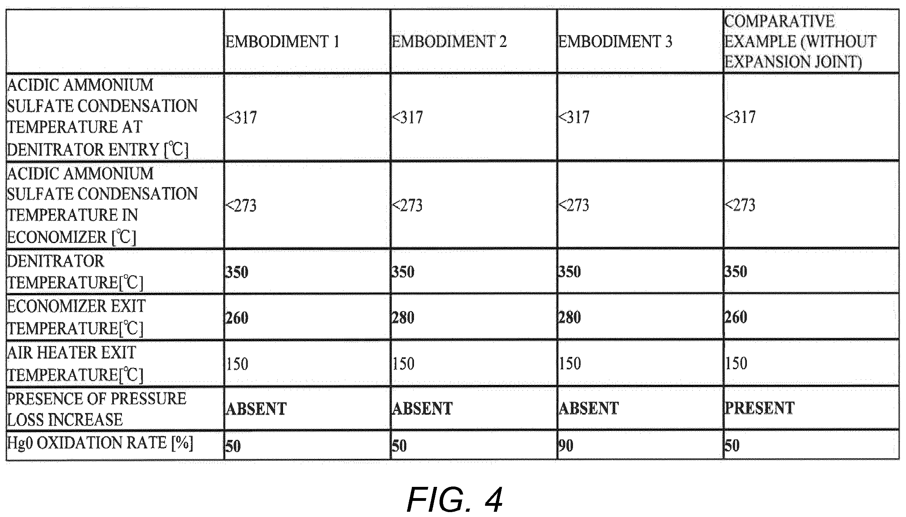

Comparison between Embodiments and Comparative Example will be illustrated below. Figure 4 is a table showing comparative results of Embodiments and Comparative Example. In Figure 4, there are shown conditions and results for Embodiment 1 exemplified in Figure 1, Embodiment 2 exemplified in Figure 2, Embodiment 3 exemplified in Figure 3, and Comparative Example in which expansion joint 201 is not installed. Due to the different ammonia concentration as described above, the condensation temperature of the acidic ammonium sulfate at the entry of the denitrator 102 (denitration catalyst 103) is set to a temperature below 317°C and that at the exit of the economizer 107 is set to a temperature below 273°C. The entry and exit temperature in the denitrator 102 (denitration catalyst 103) T1 is 350°C so as to be kept at a temperature above the condensation temperature of the acidic ammonium sulfate.

In Comparative Example, the exit temperature in the economizer 107 T2 is 260°C, which is lower than 273°C, whereby acidic ammonium sulfate is precipitated in the economizer 107. This results in ash plugging in economizer 107 and increase of pressure loss therein depending on the operation time.

In Embodiment 1, on the other hand, the exit temperature in the economizer 107 T2 is set to 260°C, which is lower than 273°C, but increasing in size of the denitration catalyst supporting beam 104 and denitrator supporting beam 105 becomes unnecessary. Therefore, ash deposition on the denitration catalyst supporting beam 104 can be avoided and the acidic ammonium sulfate attached in the economizer 107 can be water-washed with the water-washing equipment 207, whereby it is possible to prevent ash plugging in the economizer 107 and to inhibit increase of pressure loss. In addition, installing the expansion joint 201 promotes mixing of the gas so that local ash deposition can be prevented and increase of pressure loss can be inhibited.

In Embodiment 2, gas temperatures in the denitrator 102 and the economizer (heat exchanger) 107 are higher than the corresponding condensation temperature of acidic ammonium sulfate. As the exit temperature in the economizer 107 T2 is set to 280°C, which is higher than 273°C, and acidic ammonium sulfate condensation can be prevented, ash plugging in the economizer 107 can be prevented, increase of pressure loss can be inhibited, and further the water-washing equipment 207 becomes unnecessary. Additionally, ash deposition and deviation of the flue gas flow rate distribution can be prevented as increasing in size of the denitration catalyst supporting beam 104 and denitrator supporting beam 105 becomes unnecessary as well as Embodiment 1.

In Embodiment 3, as the exit temperature in the economizer 107 T2 is set to 280°C, which is higher than 273°C, as well as Embodiment 2 and acidic ammonium sulfate condensation can be prevented, ash plugging in the economizer 107 can be prevented, increase of pressure loss can be inhibited, and further the water-washing equipment 207 becomes unnecessary. As a result, the mercury oxidation catalyst 401 can be arranged at the exit of the economizer 107 so that 90% of the mercury in metallic state can be oxidized to that in oxidized state to be removed by the mercury oxidizing function of the mercury oxidation catalyst 401. As the exit temperature in the economizer 107 T2 (280°C) is set to a temperature lower than the entry temperature in the denitrator 102 T1 (350°C), the mercury oxidation catalyst 401 exerts high activity thereof. Furthermore, ash deposition and deviation of the flue gas flow rate distribution can be prevented as increasing in size of the denitration catalyst supporting beam 104 and denitrator supporting beam 105 becomes unnecessary as well as Embodiments 1 and 2.

A denitration system according to the present invention is capable of avoiding increasing in size of the denitration catalyst supporting beam and denitrator supporting beam, preventing ash deposition and deviation of the flue gas flow rate distribution, preventing plugging and corrosion due to the acidic ammonium sulfate condensation, and preventing deterioration of the mercury oxidation catalyst due to water wetting, and thus is useful for a denitration system avoiding harmful effects due to the acidic ammonium sulfate condensation.

Description of Symbols

| | |
|---|---|
| 001 | Boiler |
| 002 | Damper |
| 003 | Air heater |
| 004 | Reducing agent injector |
| 102 | Denitrator |
| 103 | Denitration catalyst |
| 104 | Denitration catalyst supporting beam |
| 105 | Denitrator supporting beam |
| 107 | Economizer (heat exchanger) |
| 201 | Expansion joint |
| 202 | Water-washing equipment (washing equipment) |
| 208 | Exit duct |
| 209 | Ash hopper |
| 401 | Mercury oxidation catalyst |

**Claims**

1. A denitration system comprising:

   a denitrator (102) comprising a denitration catalyst (103) which, with a reducing agent injected into a nitrogen oxide in a flue gas, denitrates the nitrogen oxide and a casing (210);
   an economizer (107) for preheating a boiler feed water by the flue gas heat exchange, arranged downstream of the denitrator (102);
   an expansion joint duct (201) for connecting of an exit of the denitrator (102) and an inlet of the economizer (107); and
   a supporting structure (206) for holding loads of the denitrator (102), the expansion joint duct (201) and the economizer (107), wherein
   the expansion joint duct (201) has a downstream length to ensure mixing of the reducing agent and sulfur trioxide in the flue gas exhausted from the denitrator (102) ;
   the supporting structure (206) provides a denitrator supporting beam (105) for supporting loads of the casing (210), the denitration catalyst (103) and a denitration catalyst supporting beam (104) which holds the denitration catalyst (103)in the denitrator, and an economizer supporting beam (205) which supports loads of the expansion joint duct (201) and the economizer (107);
   the economizer (107) is supported by the economizer supporting beam (205),
   the expansion joint duct (201) is supported by the economizer supporting beam (205) through the economizer (107),
   whereby the economizer (107) is suspended from the expansion joint duct (201), and
   whereby the economizer supporting beam (205) is connected to the supporting structure (206).

2. The denitration system according to claim 1, further comprising a washing equipment (207) for washing the economizer (107).

3. The denitration system according to claim 1 or 2, further comprising a mercury oxidation catalyst (401) oxidizing mercury in the flue gas with a halogen gas, the catalyst (401) being arranged downstream and at the exit of the economizer (107),
   wherein the expansion joint duct (201) promotes mixing of the halogen gas and the mercury.

4. The denitration system according to any one of claims 1 to 3, wherein gas temperatures in the denitrator (102) and the economizer (107) are set higher than the condensation temperature of acidic ammonium sulfate.

**Patentansprüche**

1. Denitrierungssystem, welches Folgendes umfasst:

ein Denitrierungs-Agens (102), das einen Denitrierungs-Katalysator (103) umfasst, der mit einem Reduktionsmittel in ein Stickoxid in einem Rauchgas eingespritzt das Stickoxid denitiert, und ein Gehäuse (210);
einen Economizer (107) zum Vorwärmen eines Kesselspeisewassers durch den Rauchgaswärmeaustausch, der stromabwärts des Denitrierers (102) angeordnet ist;
einen Ausdehnungs-Verbindungskanal (201) zum Verbinden eines Ausgangs des Denitrators (102) und eines Einlasses des Economizers (107); und
eine Trägerstruktur (206) zum Halten von Lasten des Denitrators (102), des Ausdehnungs-Verbindungskanals (201) und des Economizers (107), worin
der Ausdehnungs-Verbindungskanal (201) eine stromabwärts gerichtete Länge aufweist, um ein Vermischen des Reduktionsmittels und des Schwefeltrioxids in dem aus dem Denitrator (102) austretenden Rauchgas zu gewährleisten,
worin die Stützstruktur (206) einen Denitrator-Stützbalken (105) zum Stützen von Lasten des Gehäuses (210) und des Denitrierungskatalysators (103) liefert und einen Denitrierungs-katalysator-Stützbalkens (104), der den Denitrierungskatalysator (103) in dem Denitrator hält, und einen Economizer-Stützbalken (205), der die Lasten des Ausdehnungs-Verbindungskanals (201) und des Economizers (107) trägt;
worin der Economizer (107) von dem Economizer-Stützbalken (205) getragen wird,
worin der Ausdehnungs-Verbindungskanal I (201) von dem Economizer-Stützbalken (205) durch den Economizer (107) getragen wird,
worin der Economizer (107) an dem Ausdehnungs-Verbindungskanal (201) aufgehängt ist, und
worin der Tragebalken (205) des Economizers mit der Tragkonstruktion (206) verbunden ist.

2. Denitrierungssystem nach Anspruch 1, das weiter eine Waschvorrichtung (207) zum Waschen des Economizers (107) umfasst.

3. Denitrierungssystem nach Anspruch 1 oder 2, das weiter einen Quecksilberoxidationskatalysator (401) umfasst, der Quecksilber im Rauchgas mit einem Halogengas oxidiert, worin der Katalysator (401) stromabwärts und am Ausgang des Economizers (107) angeordnet ist,
worin der Kompensationskanal (201) die Vermischung des Halogengases und des Quecksilbers fördert.

4. Denitrierungssystem nach einem der Ansprüche 1 bis 3, worin die Gastemperaturen im Denitrator (102) und im Economizer (107) höher eingestellt sind als die Kondensationstemperatur von saurem Ammoniumsulfat.


**Revendications**

1. Système de dénitration comprenant :

un dénitrateur (102) comprenant un catalyseur de dénitration (103) qui, avec un agent réducteur injecté dans un oxyde d'azote dans un gaz de combustion, dénitre l'oxyde d'azote et un boîtier (210) ;
un économiseur (107) pour préchauffer une eau d'alimentation de chaudière par l'échange de chaleur de gaz de combustion, agencé en aval du dénitrateur (102) ;
un conduit de joint d'expansion (201) pour connecter une sortie du dénitrateur (102) et une admission de l'économiseur (107) ; et
une structure de support (206) pour maintenir les charges du dénitrateur (102), du conduit de joint d'expansion (201) et de l'économiseur (107), dans lequel
le conduit de joint d'expansion (201) a une longueur en aval pour assurer le mélange de l'agent réducteur et du trioxyde de soufre dans le gaz de combustion évacué à partir du dénitrateur (102) ;
la structure de support (206) fournit une poutre de support de dénitrateur (105) pour supporter les charges du boîtier (210), du catalyseur de dénitration (103) et d'une poutre de support de catalyseur de dénitration (104) qui maintient le catalyseur de dénitration (103) dans le dénitrateur, et une poutre de support d'économiseur (205) qui supporte les charges du conduit de joint d'expansion (201) et de l'économiseur (107) ;
l'économiseur (107) est supporté par la poutre de support d'économiseur (205),
le conduit de joint d'expansion (201) est supporté par la poutre de support d'économiseur (205) à travers l'économiseur (107),

ce qui permet à l'économiseur (107) d'être suspendu au conduit de joint d'expansion (201), et
ce qui permet à la poutre de support d'économiseur (205) d'être connectée à la structure de support (206).

2. Système de dénitration selon la revendication 1, comprenant en outre un équipement de lavage (207) pour laver l'économiseur (107).

3. Système de dénitration selon la revendication 1 ou 2, comprenant en outre un catalyseur (401) d'oxydation du mercure oxydant le mercure dans le gaz de combustion avec un gaz halogène, le catalyseur (401) étant agencé en aval et à la sortie de l'économiseur (107),
dans lequel le conduit de joint d'expansion (201) favorise le mélange du gaz halogène et du mercure.

4. Système de dénitration selon l'une quelconque des revendications 1 à 3, dans lequel des températures de gaz dans le dénitrateur (102) et l'économiseur (107) sont réglées plus haut que la température de condensation du sulfate d'ammonium acide.

*FIG. 1*

*FIG. 2*

*FIG. 3*

| | EMBODIMENT 1 | EMBODIMENT 2 | EMBODIMENT 3 | COMPARATIVE EXAMPLE (WITHOUT EXPANSION JOINT) |
|---|---|---|---|---|
| ACIDIC AMMONIUM SULFATE CONDENSATION TEMPERATURE AT DENITRATOR ENTRY [℃] | <317 | <317 | <317 | <317 |
| ACIDIC AMMONIUM SULFATE CONDENSATION TEMPERATURE IN ECONOMIZER [℃] | <273 | <273 | <273 | <273 |
| DENITRATOR TEMPERATURE[℃] | 350 | 350 | 350 | 350 |
| ECONOMIZER EXIT TEMPERATURE[℃] | 260 | 280 | 280 | 260 |
| AIR HEATER EXIT TEMPERATURE[℃] | 150 | 150 | 150 | 150 |
| PRESENCE OF PRESSURE LOSS INCREASE | ABSENT | ABSENT | ABSENT | PRESENT |
| Hg0 OXIDATION RATE [%] | 50 | 50 | 90 | 50 |

*FIG. 4*

EP 2 786 795 B1

FIG. 5(a)

FIG. 5(b)

FIG. 6

## REFERENCES CITED IN THE DESCRIPTION

**Patent documents cited in the description**

- JP 2004237244 A
- US 5423272 A
- WO 2005061103 A
- EP 0753701 A